# EUROPEAN PATENT SPECIFICATION

(11) **EP 3 261 317 B1**
(45) Date of publication and mention of the grant of the patent: **11.09.2019**
(21) Application number: 17175052.4
(22) Date of filing: 08.06.2017
(51) Int. Cl.: H04L 29/06, H04L 9/32, H04W 12/06, H04W 12/08

(54) **AUTHENTICATION SYSTEM, COMMUNICATION SYSTEM, AND AUTHENTICATION AND AUTHORIZATION METHOD**
AUTHENTIFIZIERUNGSSYSTEM, KOMMUNIKATIONSSYSTEM SOWIE AUTHENTIFIZIERUNG UND AUTORISIERUNGSVERFAHREN
SYSTÈME D'AUTHENTIFICATION, SYSTÈME DE COMMUNICATION ET PROCÉDÉ D'AUTHENTIFICATION ET D'AUTORISATION

(30) Priority: 23.06.2016 JP 2016124755
(43) Date of publication of application: 27.12.2017
(73) Proprietor: Ricoh Company, Ltd., Tokyo 143-8555 (JP)
(72) Inventor: HORIUCHI, Takeshi, Tokyo 143-8555 (JP); UMEHARA, Naoki, Tokyo 143-8555 (JP); HINOHARA, Hiroshi, Tokyo 143-8555 (JP); MIYAMOTO, Atsushi, Tokyo 143-8555 (JP); SONEDA, Takuya, Tokyo 143-8555 (JP)
(74) Representative: Watkin, Timothy Lawrence Harvey

(56) References cited:
- EP-A1- 2 770 662
- US-A1- 2005 005 133
- US-A1- 2014 380 429
- D Hardt: "RFC 6749 The OAuth 2.0 Authorization Framework", , 31 October 2012 (2012-10-31), pages 1-76, XP055218558, Retrieved from the Internet: URL:https://www.rfc-editor.org/rfc/pdfrfc/ rfc6749.txt.pdf [retrieved on 2015-10-06]
- SAKIMURA B KIHARA N ET AL: "Structured Access Token for Sharing Authorization Grant between a Resource Server and an Authorization Server; draft-sakimura-oidc-structured-token-01.tx t", STRUCTURED ACCESS TOKEN FOR SHARING AUTHORIZATION GRANT BETWEEN A RESOURCE SERVER AND AN AUTHORIZATION SERVER; DRAFT-SAKIMURA-OIDC-STRUCTURED-TOKEN-01.TX T, INTERNET ENGINEERING TASK FORCE, IETF; STANDARDWORKINGDRAFT, INTERNET SOCIETY (ISOC) 4, RUE DE, 25 February 2013 (2013-02-25), pages 1-12, XP015092187, [retrieved on 2013-02-25]

## Description

### Technical Field

Embodiments of the present disclosure relate to an authentication system, a communication system, and an authentication and authorization method.

### Background Art

For example, protocols such as transport layer security (TLS) is known in the art where a connection with a communication terminal is established after authenticating a client using client certificate. Moreover, protocols such as OAuth 2.0 is known in the art where a request sender can access resources after the communication terminal that has sent the request for resources is authenticated and authorized.

JP-2014-531163-A relates to a method including a step of transmitting identifier, authentication credential, and access permission to a centralized secure management system in a distinguishable format, using a third-party application, a step of transferring the identifier and the access permission to a permission server using the centralized secure management system after the third-party application is successfully authenticated, and a step of issuing an access token to the third-party application via the centralized secure management system when the access permission is valid, where the access token is used to access resources to which access by users is controlled by the permission server.

US 2014/380429 discloses an authority delegate system, including a server system and an authorization system.

US 2005/005133 discloses a management server that manufactures a secure, tamper-resistant token for a particular user specifying the permissions and authorizations.

In a communication system where the functions on the service side are distributed over a plurality of systems, a communication terminal may send a request for access to resources to the resource provision system after the communication terminal is authenticated by the authentication system and the connection with the authentication system is established. In such a configuration, when the resource provision system is not connected to the above connection, the resource provision system cannot share the client certificate that is used as authentication information by the authentication system to authenticate the communication terminal to access the resources.

### SUMMARY

There is provided an authentication system in accordance with claim 1, a communication system in accordance with claim 2, a method of performing authentication and authorization in accordance with claim 6, and a carrier means carrying computer readable code for controlling a computer system to carry out the method in accordance with claim 7. The authentication system and the method include establishing a first connection with a communication terminal after performing authentication with client certificate sent from the communication terminal, receiving a request for access authorization from the communication terminal after the first connection is established, outputting an access token corresponding to the client certificate in response to the received request for access authorization, the access token indicating authorization for the communication terminal to access a resource, and transmitting the authorization data to the communication terminal, whereby the communication terminal is able to access a resource provision system through a second connection different from the first connection using the access token. The communication system includes the authentication system, and a resource provision system that checks the authorization data and provides the communication terminal with the resource.

According to one aspect of the present disclosure, the resource provision system can share the authentication information, which is used by the authentication system connected to the connection different from the connection to which the resource provision system is connected, with the authentication system.

### BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.
FIG. 1 is a schematic diagram illustrating a configuration of a communication system according to an embodiment of the present disclosure.
FIG. 2 is a schematic block diagram illustrating a hardware configuration of a communication terminal according to an embodiment of the present disclosure.
FIG. 3 is a schematic block diagram illustrating a hardware configuration of a management system according to an embodiment of the present disclosure.
FIG. 4 is a functional block diagram of a communication terminal and a management system, according to an embodiment of the present disclosure.
FIG. 5 is a sequence diagram illustrating processes according to an embodiment of the present disclosure.

The accompanying drawings are intended to depict exemplary embodiments of the present disclosure and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

In the following description, an embodiment of the present invention is described with reference to the drawings.

### <<Schematic Configuration of Communication System>>

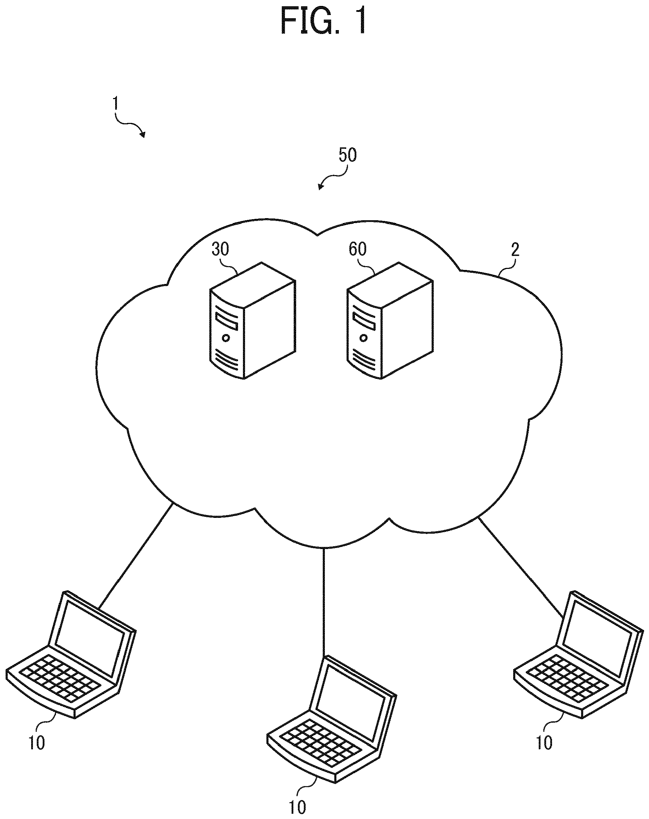

FIG. 1 is a schematic diagram illustrating a configuration of a communication system according to the present embodiment.

In FIG. 1, a communication network 2 includes the service side related to authentication and resource provision, and the user side is connected to the communication network 2.

Hereinafter, any one of communication terminals 10 may be referred to as a communication terminal 10. The communication system 1 includes the communication terminals 10 and the management system 50. The management system 50 includes an authentication system 30 and a resource provision system 60. The communication terminal 10 may be, for example, a general-purpose terminal such as a tablet personal computer (PC), a smartphone, and a PC, or a personal communication terminal such as a television conference terminal, an electronic whiteboard, digital signage, and a camera. In the communication system 1, the number and type of the communication terminal is not limited. The types of the communication terminals 10 may be similar to each other, or may be different from each other.

In the communication system 1, the resources are stored, for example, in the management system 50 or in any desired server in the communication network 2. The resources are, for example, data such as an address book or session history, or a talking application or a video conference application.

The authentication system 30 authenticates the request sender terminal using the client certificate sent from the communication terminal 10 that has sent the request for authentication, and establishes a transport layer security (TLS) connection with the communication terminal 10. The resource provision system 60 allows the communication terminal 10 that is the request sender of the resources to access the resources.

### <<Hardware Configuration>>

Next, the hardware configuration of the elements of the communication system 1 is described.

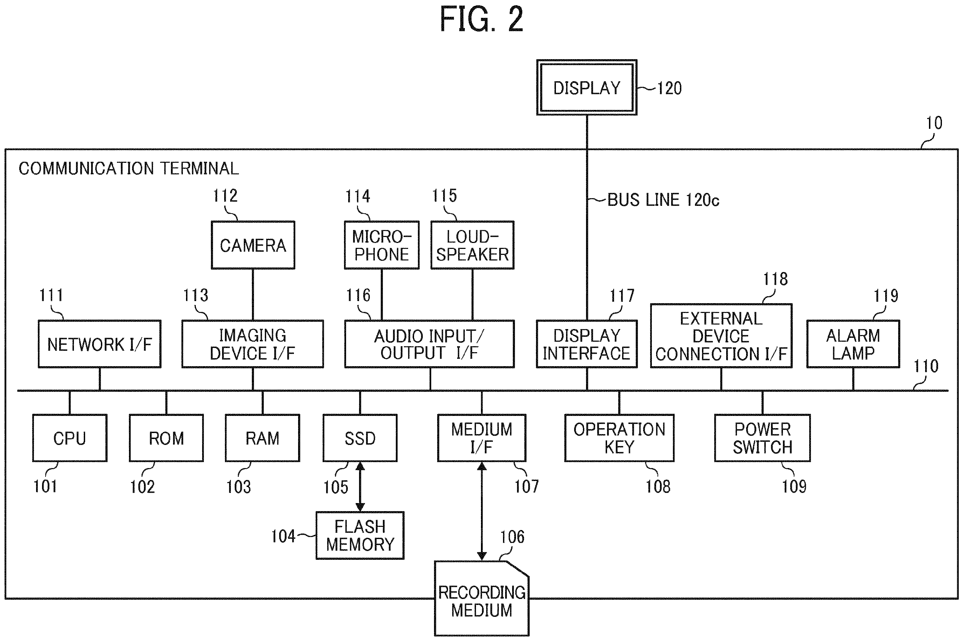

FIG. 2 is a schematic block diagram illustrating the hardware configuration of the communication terminal 10 according to the present embodiment.

The hardware configuration of the communication terminal 10 is not limited to the hardware configuration illustrated in FIG. 2 as long as the communication terminal 10 is capable of performing communication. For example, the communication terminal 10 may include an additional element that is not illustrated in FIG. 2. Alternatively, some of the elements illustrated in FIG. 2 may be omitted. Moreover, some of the elements illustrated in FIG. 2 may be, for example, an external device that can be coupled to the communication terminal 10.

As illustrated in FIG. 2, the communication terminal 10 of the embodiment includes a central processing unit (CPU) 101 that controls entire operation of the communication terminal 10, a read only memory (ROM) 102 that stores a program for operating the CPU 101 such as an initial program loader (IPL), a random access memory (RAM) 103 that operates as a work area for the CPU 101, a flash memory 104 that stores various types of data, such as the terminal control program, image data, and sound data, a solid state drive (SSD) 105 that controls reading/writing of various types of data from/to the flash memory 104 under control of the CPU 101, a medium I/F 107 that controls reading/writing (storage) of data from/to a recording medium 106 such as a flash memory or integrated circuit (IC) card, the operation key 108 operated in the case of, for example, selecting a counterpart terminal of the communication terminal 10, the power switch 109 for turning on/off the power of the communication terminal 10, and a network interface (I/F) 111 for transmitting data using the communication network 2.

The communication terminal 10 further includes the built-in camera 112 that captures an image of a subject and obtains image data under control of the CPU 101, an imaging element I/F 113 that controls driving of the camera 112, the built-in microphone 114 that receives an audio input, the built-in loudspeaker 115 that outputs sounds, an audio input and output (input/output) interface (I/F) 116 that processes inputting/outputting of an audio signal between the microphone 114 and the loudspeaker 115 under control of the CPU 101, a display interface (I/F) 117 that transmits image data to an external display 120 under control of the CPU 101, an external device connection interface (I/F) 118 for connecting various external devices, an alarm lamp 119 for notifying of an error in functionality of the communication terminal 10, and a bus line 110 such as an address bus and a data bus for electrically connecting the above-described elements as illustrated in FIG. 2.

The display 120 is a display made of liquid crystal or organic electroluminescence (EL) that displays an image of a subject, an operation icon, or the like. The display 120 is connected to the display interface 117 via a cable 120c. The cable 120c may be an analog red green blue (RGB) (video graphic array (VGA)) signal cable, a component video cable, a high-definition multimedia interface (HDMI, registered trademark) signal cable, or a digital video interactive (DVI) signal cable.

The camera 112 includes a lens and a solid-state image sensing device that converts an image (video) of a subject to electronic data through photoelectric conversion. As the solid-state imaging element, for example, a complementary metal-oxide-semiconductor (CMOS) or a charge-coupled device (CCD) is used.

To the external device connection interface 118, an external device such as an external camera, an external microphone, and an external loudspeaker can be electrically connected, through a Universal Serial Bus (USB) cable or the like that is inserted into a connection port 1132 of the housing of a housing 1100. In cases where an external camera is connected, the external camera is driven on a priority basis and the built-in camera 112 is not driven under the control of the CPU 101. In a similar manner to the above, in the case where an external microphone is connected or an external loudspeaker is connected, the external microphone or the external loudspeaker is driven under the control of the CPU 101 on a top-priority basis over the built-in microphone 114 or the built-in loudspeaker 115.

The recording medium 106 is removable from the communication terminal 10. In addition, a nonvolatile memory that reads or writes data under the control of the CPU 101 is not limited to the flash memory 104, and for example, an electrically erasable and programmable read-only memory (EEPROM) may be used instead.

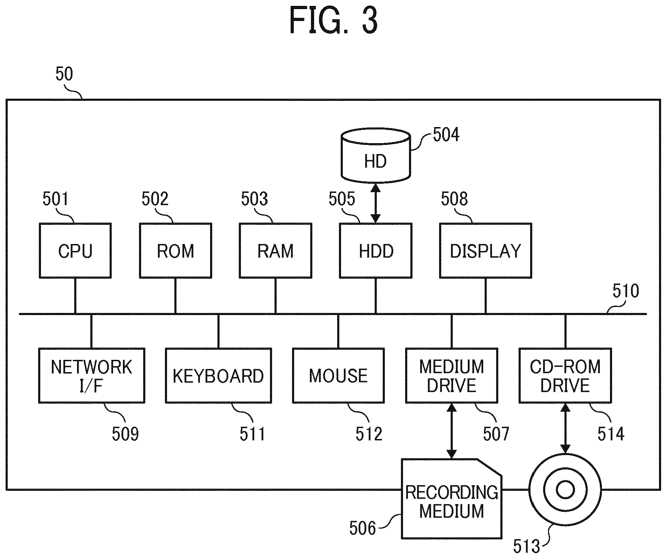

FIG. 3 is a schematic block diagram illustrating a hardware configuration of the management system 50 according to the present embodiment.

The management system 50 according to the present embodiment includes a CPU 501 that controls the entire operation of the management system 50, a ROM 502 that stores a control program for controlling the CPU 501 such as the IPL, a RAM 503 that is used as a work area for the CPU 501, a hard disk (HD) 504 that stores various kinds of data such as a control program for the management system 50, a hard disk drive (HDD) 505 that controls reading or writing of various kinds of data to or from the HD 504 under control of the CPU 501, a medium drive 507 that controls reading or writing of data from and to a recording medium 506 such as a flash memory, a display 508 that displays various kinds of information such as a cursor, a menu, a window, a character, and an image, a network interface (I/F) 509 that performs data communication using the communication network 2, a keyboard 511 that is provided with a plurality of keys for allowing a user to input, for example, characters, numerical values, and various kinds of instructions, a mouse 512 for, for example, selecting or executing various kinds of instructions, selecting an object to be processed, and for moving a cursor, a compact disc read only memory (CD-ROM) drive 514 that reads or writes various kinds of data from and to a CD-ROM 513, which is one example of removable recording medium, and a bus line 510 such as an address bus or a data bus that electrically connects various elements as above to each other as illustrated in FIG. 3.

Note that each one of the authentication system 30 and the resource provision system 60, which together configure the management system 50, has the configuration as illustrated in FIG. 3.

### <<Functional Configuration>>

Next, the functional configuration according to the present embodiment is described.

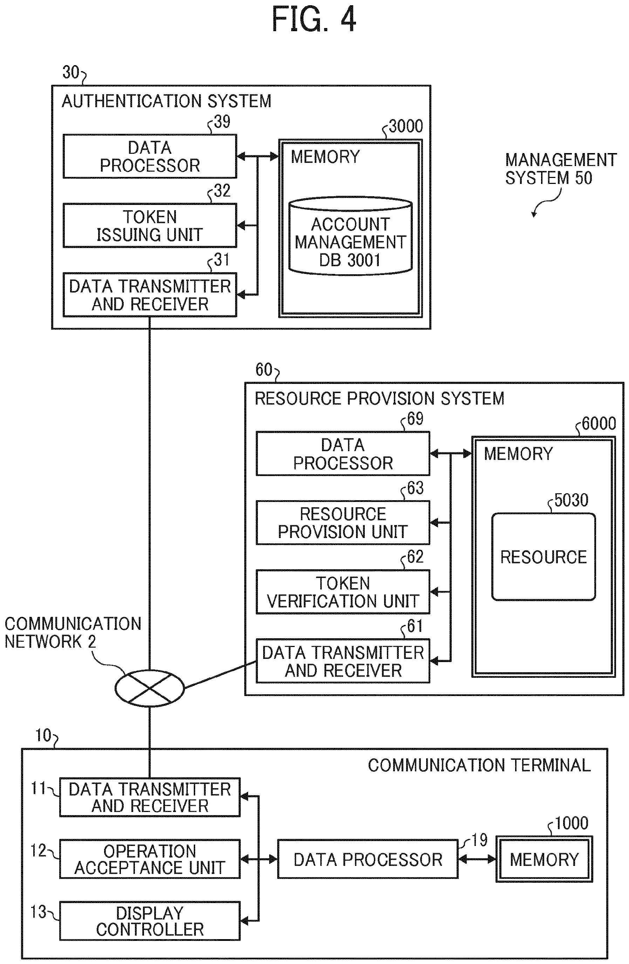

FIG. 4 is a schematic block diagram illustrating a functional configuration of the communication terminal 10 and the management system 50 in the communication system 1, according to the present embodiment.

In FIG. 4, the communication terminal 10 and the management system 50 are connected with each other so as to perform data communication through the communication network 2.

### <Functional Configuration of Communication Terminal>

The communication terminal 10 includes a data transmitter and receiver 11, an operation acceptance unit 12, a display controller 13, and a data processor 19. These elements are functions that are implemented by the operation of some of the hardware components illustrated in FIG. 2 executed by the instructions from the CPU 101 in accordance with a control program expanded from the flash memory 104 onto the RAM 103. The communication terminal 10 further includes a memory 1000 configured by the ROM 102, the RAM 103, and the flash memory 104 illustrated in FIG. 2.

### <Detailed Functional Configuration of Communication Terminal>

Next, the functional configuration of the communication terminal 10 is described in detail with reference to FIG. 2 and FIG. 4. In the following description of the functional configuration of the communication terminal 10, the relation of the hardware elements in FIG. 2 with the functional configuration of the communication terminal 10 will also be described.

The data transmitter and receiver 11 is implemented by the network interface 111 and the instructions from the CPU 101 illustrated in FIG. 2, and transmits or receives various kinds of data (or information) to or from, for example, a counterpart communication terminal, devices and apparatuses, or a system, through the communication network 2.

The operation acceptance unit 12 are implemented by the instructions from the CPU 101, the operation key 108, or the power switch 109, and receives various kinds of inputs from the user or receives various kinds of selection made by the user.

The display controller 13 is substantially implemented by the instructions from the CPU 101 illustrated in FIG. 2 and the display interface 117 illustrated in FIG. 2, and sends the image data that is sent from the counterpart communication terminal to the display 120 during the conversation.

The data processor 19 is substantially implemented by the instructions from the CPU 101 and the SSD 105 each of which is illustrated in FIG. 2. Alternatively, the data processor 19 is substantially implemented by the instructions from the CPU 101 illustrated in FIG. 2, and performs processing to store various types of data in the memory 1000 or read various types of data stored in the memory 1000.

### <Functional Configuration of Management System>

The authentication system 30 of the management system 50 includes a data transmitter and receiver 31, a token issuing unit 32, and a data processor 39. These elements are functions implemented by or caused to function by operating some of the elements illustrated in FIG. 3 under the control of the instructions from the CPU 501. Note also that such instructions from the CPU 501 are made in accordance with a program for the authentication system 30 expanded from the HD 504 to the RAM 503. The authentication system 30 also includes a memory 3000 that is configured by the HD 504 illustrated in FIG. 3.

### <Account Management Table>

Table 1 is a diagram illustrating an example data structure of an account management table, according to the present embodiment. In the memory 3000, as illustrated in FIG. 4, an account management database (DB) 3001 that is made of an account management table is stored. The account management table stores the common name and the resource ID of the resources to which an account is authorized to access, in association with each other, on account ID (identifier, identification) by account ID basis. With the account ID, an account that is authorized to access specific resources can be identified. The common name is included in the client certificate that is used when the TLS connection is established, and the counterpart communication terminal of the TLS connection, i.e., the communication terminal 10 side, can be identified by the common name. In the present embodiment, ID and names may be indicated by any desired data such as a text, number, and a sign. The ID may be a mail address or a telephone number that could uniquely identify the user.

**[Table 1]**

| Account ID | Common Name | Resource ID |
|---|---|---|
| A101 | CN101 | R1001, R1002 |
| A102 | CN102 | R2001, R2002, R2003 |
| - | - | - |

The data transmitter and receiver 31 is implemented by the network interface 509 and the instructions from the CPU 501 illustrated in FIG. 3, and transmits or receives various kinds of data (or information) to or from the other communication terminals, apparatuses, or systems through the communication network 2.

The token issuing unit 32 is implemented by the instructions from the CPU 501 illustrated in FIG. 3, and issues an access token in response to a request sent from the communication terminal 10.

The data processor 39 is substantially implemented by the instructions from the CPU 501 and the HDD 505 each of which is illustrated in FIG. 3. performs processing to store various types of data in the memory 3000 or read various types of data stored in the memory 3000.

The resource provision system 60 of the management system 50 includes a data transmitter and receiver 61, a token verification unit 62, a resource provision unit 63, and a data processor 69. These elements are functions implemented by or caused to function by operating some of the elements illustrated in FIG. 3 under the control of the instructions from the CPU 501. Note also that such instructions from the CPU 501 are made in accordance with a program for the resource provision system 60 expanded from the HD 504 to the RAM 503. The resource provision system 60 also includes a memory 6000 that is configured by the HD 504 illustrated in FIG. 3.

In the memory 6000, the resource 5030 is stored in association with the resource ID. When the access token obtained from the communication terminal 10 is verified to be authentic, the resource provision unit 63 provides the communication terminal 10 with the resource 5030.

The data transmitter and receiver 61 is implemented by the network interface 509 and the instructions from the CPU 501 illustrated in FIG. 3, and transmits or receives various kinds of data (or information) to or from the other communication terminals, apparatuses, or systems through the communication network 2.

The token verification unit 62 is implemented by the instructions from the CPU 501 illustrated in FIG. 3, and checks the access token sent from the communication terminal 10.

The resource provision unit 63 is implemented by the instructions from the CPU 501 illustrated in FIG. 3, and provides the communication terminal 10 with the resources according to the result of the check made to the access token.

The data processor 69 is substantially implemented by the instructions from the CPU 501 and the HDD 505 each of which is illustrated in FIG. 3. performs processing to store various types of data in the memory 6000 or read various types of data stored in the memory 6000.

### <Operation>

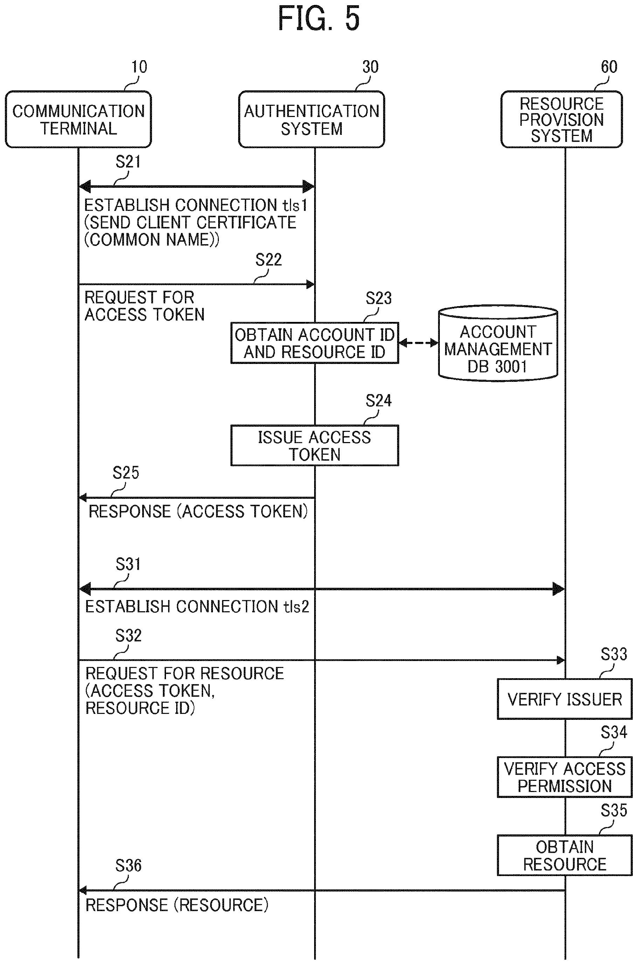

Next, operation of the communication terminal 10 and the management system 50 that together configure the communication system 1 is described. Firstly, the authentication processes according to the present embodiment are described with reference to FIG. 5.

FIG. 5 is a sequence diagram illustrating the authentication processes according to the present embodiment.

The data transmitter and receiver 11 of the communication terminal 10 and the data transmitter and receiver 31 of the authentication system 30 have the basic functions of the TLS communication. The data transmitter and receiver 11 of the communication terminal 10 and the data transmitter and receiver 31 of the authentication system 30 establishes a connection tls1 using the handshaking protocol of the TLS (step S21). According to the handshaking protocol, the data transmitter and receiver 11 of the communication terminal 10 sends an encrypted client certificate to the authentication system 30. The client certificate may be stored in the memory 1000 of the communication terminal 10, the flash memory 104, or the recording medium 106, or may be obtained from external device through the external device connection interface 118. The client certificate includes a common name that identifies the communication terminal 10 side. The data transmitter and receiver 31 of the authentication system 30 receives the encrypted client certificate, and decrypts the received encrypted client certificate. By so doing, the data transmitter and receiver 31 of the authentication system 30 authenticates the communication terminal 10 side that serves as a client.

Once the connection tls1 is established, the data transmitter and receiver 11 of the communication terminal 10 and the data transmitter and receiver 31 of the authentication system 30 starts the data communication using the data that is encrypted by the common key of the connection tls1. In this communication, the data transmitter and receiver 11 of the communication terminal 10 sends a request for an access token to access the resource 1030 to the authentication system 30 (step S22). The data transmitter and receiver 31 of the authentication system 30 that has received the request for the access token adds the common name included in the client certificate received in the step S21 to the request for the access token, and transfers the resultant data to the token issuing unit 32.

The token issuing unit 32 of the authentication system 30 uses the common name added to the request for the access token as a search key to search the account management table (see Table 1) and obtain the associated account ID and resource ID (step S23). Due to this configuration, the token issuing unit 32 authenticates the communication terminal that has sent the request to access the resources as the account of the account ID. Moreover, the token issuing unit 32 authorizes the authenticated account to access the resources of the obtained resource ID.

The token issuing unit 32 of the authentication system 30 issues, as access permission indicating permission to access the resources, an access token in which the account ID and the resource ID that are obtained in the step S23 are included and to which digital signature is added (step S24).

The data transmitter and receiver 31 of the management system 50 sends the access token, which is issued in the step S24 in response to the request for the access token, to the communication terminal 10 (step S25). The data transmitter and receiver 11 of the communication terminal 10 receives the access token in the response given from the management system 50.

The data transmitter and receiver 61 of the resource provision system 60 have the basic functions of the TLS communication. The data transmitter and receiver 11 of the communication terminal 10 and the data transmitter and receiver 61 of the resource provision system 60 establishes a connection tls2 that is different from the connection tls1 (step S31).

Once the connection tls2 is established, the data transmitter and receiver 11 of the communication terminal 10 and the data transmitter and receiver 61 of the resource provision system 60 starts the data communication using the data that is encrypted by the common key of the connection tls2. In this communication, the data transmitter and receiver 11 of the communication terminal 10 sends to the resource provision system 60 a request for a resource that includes the access token received in the step S25 and the resource ID of the resource to which access is requested (step S32). The data transmitter and receiver 61 of the resource provision system 60 receives the request for resources in the connection tls2.

The token verification unit 62 of the resource provision system 60 uses the digital signature included in the access token to check whether the access token is issued by the token issuing unit 32 of the authentication system 30 (step S33).

When it is verified that the access token is issued by the token issuing unit 32 of the authentication system 30,
The token verification unit 62 checks whether the resource ID included in the request for resources matches the resource ID included in the access permission of the access token (step S34). When the matching of the resource ID is verified, the token verification unit 62 outputs the access permission to the resource provision unit 63.

Once the access permission is output, the resource provision unit 63 obtains from the memory 6000 the resource 5030 that corresponds to the resource ID included in the request for resources (step S35).

The data transmitter and receiver 61 of the resource provision system 60 sends the resource 5030 obtained by the resource provision unit 63 to the communication terminal 10 that is the request sender, in response to the request for resources (step S36). The data transmitter and receiver 11 of the communication terminal 10 receives the resource 5030 sent from the resource provision system 60. Accordingly, the communication terminal 10 can access the resource 5030.

Note also that the memory 6000 of the resource provision system 60 stores the uniform resource locator (URL) of the resource 5030 in association with the resource ID, instead of where the resource 5030 being stored in association with the resource ID. In this configuration, the resource provision unit 63 obtains the URL of the resource 5030 that corresponds to the resource ID included in the request for resources. The data transmitter and receiver 61 of the resource provision system 60 sends the obtained URL to the communication terminal 10 that is the request sender of the resources. Due to this configuration, the communication terminal 10
Can access the resource 5030 based on the obtained URL.

With the authentication and authorization method according to the embodiments described above, the data transmitter and receiver 31 (i.e., an example of an establishment unit) of the authentication system 30 performs authentication with the client certificate sent from the communication terminal 10, and then establishes the connection tls1 (i.e., an example of the first connection) with the communication terminal 10. Note that such establishment is an example of establishing processes. The token issuing unit 32 (i.e., an example of an output unit) of the authentication system 30 outputs an access token that corresponds to the above client certificate as the authorization data indicating the authorization for the communication terminal 10 to access the resources. Note that such an output is an example of outputting processes. The data transmitter and receiver 31 (i.e., an example of a transmitter) of the authentication system 30 transmits the access token to the communication terminal 10. Note that such transmission is an example of transmitting processes. Due to this configuration, the communication terminal 10 sends an access token to the resource provision system 60 through the connection tls2 (i.e., an example of the second connection) that is different from the connection tls1. The data transmitter and receiver 61 (i.e., an example of a receiver) of the resource provision system 60 receives the access token through the connection tls2.

With the authentication and authorization method according to the embodiments described above, the resource provision system 60 that is connected to the connection tls2 can share the authentication information of the communication terminal 10 received by the authentication system 30 that is connected to the connection tls1, which is different from the connection tls2, with the authentication system 30. Due to this configuration, the resource provision system 60 can reduce the load of managing the data that is used for authentication and authorization.

The data transmitter and receiver 31 (i.e., an example of a receiver) of the authentication system 30 receives a request for an access token in the connection tls1. The token issuing unit 32 (i.e., an example of an output unit) of the authentication system 30 outputs an access token including the authorization data that corresponds to the client certificate of the communication terminal that has sent the request for the access token. Due to this configuration, the authentication system 30 can issue an access token that corresponds to the request sender for each of the communication terminals that have sent the requests for the access tokens.

The account management DB 3001 (i.e., an example of a manager) of the authentication system 30 stores the common name (i.e., an example of identification information) included in the client certificate and the resource ID in association with each other. The token issuing unit 32 of the authentication system 30 obtains from the account management DB 3001 the resource ID that is associated with the common name of the client certificate obtained from the communication terminal that has sent the request for the access token. outputs an access token that includes the obtained resource ID. Due to this configuration, the authentication system 30 can issue an access token based on the common name included in the client certificate.

Further, the control programs for the communication terminal 10 and the management system 50 may be recorded in a file format installable or executable on a computer-readable recording medium such as the recording medium 106 for distribution. Examples of such recording medium include, but not limited to, compact disc-recordable (CD-R), digital versatile disc (DVD), and Blu-ray disc.

Note also that a recording medium such as a CD-ROM storing the programs according to the example embodiment as described above or the HD 504 storing these programs may be distributed as a program product at home and abroad.

The communication terminal 10 and the management system 50 according to the embodiment as described above may be configured by a single computer or a plurality of computers. According to the embodiments as described above, the elements (functions or units) of the management system 50 are assigned to any one of the authentication system 30 and the resource provision system 60. Alternatively, the management system 50 includes a single authentication system 30 and a plurality of resource provision systems 60. In such a configuration, the authentication system 30 may be managed by the administrator of the entirety of the communication system 1, and each of the resource provision systems 60 may be managed by the provider of each resource.

Moreover, the authentication system 30 and the resource providing system 60 can be configured to share the processing steps disclosed, for example, in FIG. 5, in various combinations other than the above-described embodiment.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), and conventional circuit components arranged to perform the recited functions. The processing circuit herein includes, for example, devices such as a processor that is programmed to execute software to implement functions, like a processor with electronic circuits, an application specific integrated circuit (ASIC) that is designed to execute the above functions, and a circuit module known in the art.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

## Claims

1. An authentication system (30) comprising:
a memory (3000) configured to store a common name and a resource ID in association with each other and in association with an account ID;
an establishment unit (31, 501, 509) configured to
receive from a storage unit (1000) of a communication terminal (10) an encrypted client certificate, the encrypted client certificate including the common name, and
decrypt the encrypted client certificate to perform authentication of the communication terminal (10), thereby establishing a first connection, tls1, with the communication terminal (10);
a receiver (31, 509) configured to receive a request for access authorization from the communication terminal (10) after the first connection, tls1, is established;
an output unit (32, 501) configured to
obtain the account ID and the resource ID from the memory (3000) by using the common name included in the received client certificate as a search key, and
output an access token to which a digital signature is added, the access token including the obtained account ID and resource ID, in response to the received request for access authorization, the access token indicating authorization for the communication terminal (10) to access a resource; and
a transmitter (31, 509) configured to transmit the access token to the communication terminal (10),
whereby the communication terminal is able to access a resource provision system (60) through a second connection, tls2, different from the first connection, tls1, using the access token, by transmitting a request for resources including the resource ID and the access token to the resource provision system (60), the resource provision system using the digital signature to check whether the access token was issued by the authentication system (30), and
whereby, when the resource ID included in the request for resources matches the resource ID included in the access token, a URL of a resource corresponding to the resource ID is sent to the communication terminal (10).

2. A communication system (1) comprising:
the authentication system (30) according to claim 1; and
a resource provision system (60) configured to check an access token using a digital signature and provide a communication terminal (10) with a URL of a resource.

3. The communication system (1) according to claim 2, wherein the resource provision system (60) receives a resource ID and the access token through a second connection, tls2.

4. The communication system (1) according to claim 2 or 3, further comprising a communication terminal (10).

5. The communication system (1) according to claim 4, wherein the communication terminal (10) receives the access token through a first connection, tls1, established with the authentication system (30), and sends the access token through the second connection, tls2, established with the resource provision system (60).

6. A method of performing authentication and authorization, the method comprising:
storing a common name and a resource ID in association with each other and in association with an account ID in a memory (3000);
receiving, by an establishment unit (31, 501, 509), an encrypted client certificate from a storage unit (1000) of a communication terminal (10), the encrypted client certificate including the common name;
decrypting, by the establishment unit (31, 501, 509), the encrypted client certificate;
performing, by the establishment unit (31, 501, 509), authentication of the communication terminal (10), thereby establishing (S21) a first connection, tls1, with the communication terminal (10);
receiving (S22), by a receiver (31, 509), a request for access authorization from the communication terminal (10) after the first connection, tls1, is established;
obtaining from the memory (3000), by an output unit (32, 5010), the account ID and the resource ID by using the common name included in the received client certificate as a search key;
outputting (S24), by the output unit (32, 5010), an access token to which a digital signature is added, the access token including the obtained account ID and resource ID, in response to the received request for access authorization, the access token authorization for the communication terminal (10) to access a resource; and
transmitting (S25), by a transmitter (31, 509), the access token to the communication terminal (10),
whereby the communication terminal (10) is able to access a resource provision system (60) through a second connection, tls2, different from the first connection, tls1, using the access token by transmitting a request for resources including the resource ID and the access token to the resource provision system (60), the resource provision system using the digital signature to check whether the access token was issued by the authentication system (30), and
whereby, when the resource ID included in the request for resources matches the resource ID included in the access token, a URL of a resource corresponding to the resource ID is sent to the communication terminal (10).

7. A carrier means carrying computer readable code for controlling a computer system to carry out the method of claim 6.

## Patentansprüche

1. Authentifizierungssystem (30), umfassend:
einen Speicher (3000), konfiguriert zum Speichern eines gemeinsamen Namens und einer Betriebsmittel-ID in Assoziation miteinander und in Assoziation mit einer Konto-ID;
eine Einrichtungseinheit (31, 501, 509), konfiguriert zum
Empfangen, von einer Speichereinheit (100) eines Kommunikationsendgeräts (10), eines verschlüsselten Client-Zertifikats, wobei das verschlüsselte Client-Zertifikat den gemeinsamen Namen enthält, und
Entschlüsseln des verschlüsselten Client-Zertifikats, um Authentifizierung des Kommunikationsendgeräts (10) durchzuführen, wodurch eine erste Verbindung, tls1, mit dem Kommunikationsendgerät (10) eingerichtet wird;
einen Empfänger (31, 509), konfiguriert zum Empfangen einer Anforderung für Zugriffsautorisierung von dem Kommunikationsendgerät (10), nachdem die erste Verbindung, tls1, eingerichtet wurde;
eine Ausgabeeinheit (32, 501), konfiguriert zum
Erhalten der Konto-ID und der Betriebsmittel-ID von dem Speicher (3000) durch Verwendung des in dem empfangenen Client-Zertifikat enthaltenen gemeinsamen Namens als einen Suchschlüssel und
Ausgeben eines Zugriffstokens, dem eine digitale Signatur hinzugefügt wird, wobei der Zugriffstoken die erhaltene Konto-ID und Betriebsmittel-ID enthält, als Reaktion auf die empfangene Anforderung für Zugriffsautorisierung, wobei der Zugriffstoken Autorisierung für das Kommunikationsendgerät (10) zum Zugreifen auf ein Betriebsmittel angibt; und
einen Sender (31, 509), konfiguriert zum Übertragen des Zugriffstokens an das Kommunikationsendgerät (10),
wobei das Kommunikationsendgerät auf ein Betriebsmittelbereitstellungssystem (60) durch eine zweite Verbindung, tls2, die von der ersten Verbindung, tls1, verschieden ist, zugreifen kann, unter Verwendung des Zugriffstokens durch Übertragen einer Anforderung von Betriebsmitteln, enthaltend die Betriebsmittel-ID und den Zugriffstoken, an das Betriebsmittelbereitstellungssystem (60), wobei das Betriebsmittelbereitstellungssystem die digitale Signatur verwendet, um zu prüfen, ob der Zugriffstoken durch das Authentifizierungssystem (30) ausgegeben wurde, und
wobei, wenn die in der Anforderung von Betriebsmitteln enthaltene Betriebsmittel-ID der in dem Zugriffstoken enthaltenen Betriebsmittel-ID entspricht, eine URL eines Betriebsmittels korrespondierend mit der Betriebsmittel-ID an das Kommunikationsendgerät (10) gesandt wird.

2. Kommunikationssystem (1), umfassend:
das Authentifizierungssystem (30) nach Anspruch 1; und
ein Betriebsmittelbereitstellungssystem (60), konfiguriert zum Prüfen eines Zugriffstokens unter Verwendung einer digitalen Signatur und zum Versehen eines Kommunikationsendgeräts (10) mit einer URL eines Betriebsmittels.

3. Kommunikationssystem (1) nach Anspruch 2, wobei das Betriebsmittelbereitstellungssystem (60) eine Betriebsmittel-ID und den Zugriffstoken durch eine zweite Verbindung, tls2, empfängt.

4. Kommunikationssystem (1) nach Anspruch 2 oder 3, ferner umfassend ein Kommunikationsendgerät (10).

5. Kommunikationssystem (1) nach Anspruch 4, wobei das Kommunikationsendgerät (10) den Zugriffstoken durch eine erste Verbindung, tsll, eingerichtet mit dem Authentifizierungssystem (30), empfängt und den Zugriffstoken durch die zweite Verbindung, tls2, eingerichtet mit dem Betriebsmittelbereitstellungssystem (60), sendet.

6. Verfahren zum Durchführen von Authentifizierung und Autorisierung, das Verfahren umfassend:
Speichern eines gemeinsamen Namens und einer Betriebsmittel-ID in Assoziation miteinander und in Assoziation mit einer Konto-ID in einem Speicher (3000);
Empfangen, durch eine Einrichtungseinheit (31, 501, 509), eines verschlüsselten Client-Zertifikats von einer Speichereinheit (1000) eines Kommunikationsendgeräts (10), wobei das verschlüsselte Client-Zertifikat den gemeinsamen Namen enthält;
Entschlüsseln, durch die Einrichtungseinheit (31, 501, 509), des verschlüsselten Client-Zertifikats;
Durchführen, durch die Einrichtungseinheit (31, 501, 509), von Authentifizierung des Kommunikationsendgeräts (10), wodurch eine erste Verbindung, tls1, mit dem Kommunikationsendgerät (10) eingerichtet wird (S21);
Empfangen (S22), durch einen Empfänger (31, 509), einer Anforderung für Zugriffsautorisierung von dem Kommunikationsendgerät (10), nachdem die erste Verbindung, tls1, eingerichtet wurde;
Erhalten, von dem Speicher (3000), durch eine Ausgabeeinheit (32, 5010), der Konto-ID und der Betriebsmittel-ID durch Verwendung des in dem empfangenen Client-Zertifikat enthaltenen gemeinsamen Namens als einen Suchschlüssel;
Ausgeben (S24), durch die Ausgabeeinheit (32, 5010), eines Zugriffstokens, dem eine digitale Signatur hinzugefügt wird, wobei der Zugriffstoken die erhaltene Konto-ID und Betriebsmittel-ID enthält, als Reaktion auf die empfangene Anforderung für Zugriffsautorisierung, wobei der Zugriffstoken Autorisierung für das Kommunikationsendgerät (10) zum Zugreifen auf ein Betriebsmittel angibt; und
Übertragen (S25), durch einen Sender (31, 509), des Zugriffstokens an das Kommunikationsendgerät (10),
wobei das Kommunikationsendgerät (10) auf ein Betriebsmittelbereitstellungssystem (60) durch eine zweite Verbindung, tls2, die von der ersten Verbindung, tls1, verschieden ist, zugreifen kann, unter Verwendung des Zugriffstokens durch Übertragen einer Anforderung von Betriebsmitteln, enthaltend die Betriebsmittel-ID und den Zugriffstoken, an das Betriebsmittelbereitstellungssystem (60), wobei das Betriebsmittelbereitstellungssystem die digitale Signatur verwendet, um zu prüfen, ob der Zugriffstoken durch das Authentifizierungssystem (30) ausgegeben wurde, und
wobei, wenn die in der Anforderung von Betriebsmitteln enthaltene Betriebsmittel-ID der in dem Zugriffstoken enthaltenen Betriebsmittel-ID entspricht, eine URL eines Betriebsmittels korrespondierend mit der Betriebsmittel-ID an das Kommunikationsendgerät (10) gesandt wird.

7. Trägermittel, das computerlesbaren Code zum Steuern eines Computersystems zum Ausführen des Verfahrens nach Anspruch 6 trägt.

## Revendications

1. Système d'authentification (30) comprenant :
une mémoire (3000) qui est configurée pour stocker un nom commun et un ID de ressource en association l'un avec l'autre et en association avec un second ID de compte ;
unité d'établissement (31, 501, 509) qui est configurée pour :
recevoir, depuis une unité de stockage (1000), un terminal de communication (10), d'un certificat de clients cryptés, le certificat de clients cryptés incluant le nom commun ; et
décrypter le certificat de clients cryptés pour réaliser une authentification du terminal de communication (10), moyennant quoi une première connexion, tls1, est établie avec le terminal de communication (10) ;
un récepteur (31, 509) qui est configuré pour recevoir une requête demandant une autorisation d'accès en provenance du terminal de communication (10) après que la première connexion, tls1, est établie ;
une unité de sortie (32, 501) qui est configuré pour :
obtenir l'ID de compte et l'ID de ressource à partir de la mémoire (3000) en utilisant le nom commun qui est inclus dans le certificat de client reçu en tant que clé de recherche ; et
produire en sortie un jeton d'accès auquel une signature numérique est ajoutée, le jeton d'accès incluant l'ID de compte obtenu et l'ID de ressource obtenu, en réponse à la requête reçue demandant une autorisation d'accès, le jeton d'accès indiquant une autorisation pour que le terminal de communication (10) accède à une ressource ; et
un émetteur (31, 509) qui est configuré pour émettre le jeton d'accès sur le terminal de communication (10) ;
moyennant quoi le terminal de communication peut accéder à un système de fourniture de ressources (60) par l'intermédiaire d'une seconde connexion, tls2, qui est différente de la première connexion, tls1, en utilisant le jeton d'accès, en émettant une requête demandant des ressources incluant l'ID de ressource et le jeton d'accès sur le système de fourniture de ressources (60), le système de fourniture de ressources utilisant la signature numérique pour vérifier si oui ou non le jeton d'accès a été délivré par le système d'authentification (30) ; et
moyennant quoi, lorsque l'ID de ressource qui est inclus dans la requête demandant des ressources correspond à l'ID de ressource qui est inclus dans le jeton d'accès, un URL d'une ressource qui correspond à l'ID de ressource est envoyé au terminal de communication (10).

2. Système de communication (1) comprenant :
le système d'authentification (30) selon la revendication 1 ; et
un système de fourniture de ressources (60) qui est configuré pour vérifier un jeton d'accès en utilisant une signature numérique et pour fournir à un terminal de communication (10) un URL d'une ressource.

3. Système de communication (1) selon la revendication 2, dans lequel le système de fourniture de ressources (60) reçoit un ID de ressource et le jeton d'accès par l'intermédiaire d'une seconde connexion, tls2.

4. Système de communication (1) selon la revendication 2 ou 3, comprenant en outre un terminal de communication (10).

5. Système de communication (1) selon la revendication 4, dans lequel le terminal de communication (10) reçoit le jeton d'accès par l'intermédiaire d'une première connexion, tls1, qui est établie avec le système d'authentification (30) et il envoit le jeton d'accès par l'intermédiaire de la seconde connexion, tls2, qui est établie avec le système de fourniture de ressources (60).

6. Procédé de réalisation d'authentification et d'autorisation, le procédé comprenant :
le stockage d'un nom commun et d'un ID de ressource en association l'un avec l'autre et en association avec un ID de compte dans une mémoire (3000) ;
la réception, par une unité d'établissement (31, 501, 509), d'un certificat de clients cryptés en provenance d'une unité de stockage (1000) d'un terminal de communication (10), le certificat de clients cryptés incluant le nom commun ;
le décryptage, par l'unité d'établissement (31, 501, 509), du certificat de clients cryptés,
la réalisation, par l'unité d'établissement (31, 501, 509), d'une authentification du terminal de communication (10), moyennant quoi (S21) une première connexion, tls1, est établie avec le terminal de communication (10) ;
la réception (S22), par un récepteur (31, 509), d'une requête demandant une autorisation d'accès en provenance du terminal de communication (10) après que la première connexion, tls1, est établie ;
l'obtention, à partir de la mémoire (3000), au moyen d'une unité de sortie (32, 5010), de l'ID de compte et de l'ID de ressource en utilisant le nom commun qui est inclus dans le certificat de client reçu en tant que clé de recherche ;
la production en sortie (S24), par l'unité de sortie (32, 5010), d'un jeton d'accès auquel une signature numérique est ajoutée, le jeton d'accès incluant l'ID de compte obtenu et l'ID de ressource obtenu, en réponse à la requête reçue demandant une autorisation d'accès, le jeton d'accès indiquant une autorisation pour que le terminal de communication (10) accède à une ressource ; et
les émissions (S25), par un émetteur (31, 509), du jeton d'accès sur le terminal de communication (10) ;
moyennant quoi le terminal de communication (10) peut accéder à un système de fourniture de ressources (60) par l'intermédiaire d'une seconde connexion, tls2, qui est différente de la première connexion, tls1, en utilisant le jeton d'accès, en émettant une requête demandant des ressources incluant l'ID de ressource et le jeton d'accès sur le système de fourniture de ressources (60), le système de fourniture de ressources utilisant la signature numérique pour vérifier si oui ou non le jeton d'accès a été délivré par le système d'authentification (30) ; et
moyennant quoi, lorsque l'ID de ressource qui est inclus dans la requête demandant des ressources correspond à l'ID de ressource qui est inclus dans le jeton d'accès, un URL d'une ressource qui correspond à l'ID de ressource est envoyé au terminal de communication (10).

7. Moyen de support porteur d'un code pouvant être lu par un ordinateur pour commander un système informatique pour mettre en oeuvre le procédé selon la revendication 6.
